# EUROPEAN PATENT APPLICATION

(11) **EP 2 503 154 A2**
(43) Date of publication of application: **26.09.2012**
(21) Application number: 12158778.6
(22) Date of filing: 09.03.2012
(51) Int. Cl.: F04D 13/06

(54) **Motor, pump, and device**

(30) Priority: 25.03.2011 JP 2011068378
(71) Applicant: Panasonic Corporation, Osaka 571-8501 (JP)
(72) Inventor: Asanishi, Makoto, Chuo-ku, Osaka 540-6207 (JP); Hirata, Masahiro, Chuo-ku, Osaka 540-6207 (JP); Seki, Takafumi, Chuo-ku, Osaka 540-6207 (JP); Kuroki, Koji, Chuo-ku, Osaka 540-6207 (JP)
(74) Representative: Appelt, Christian W.

(57) **Abstract**

The motor includes a first rotation member and a second rotation member. The first rotation member has a predetermined rotation axis. The second rotation member includes a plurality of electric magnets arranged around the rotation axis. The motor is configured to energize the electric magnets of the second rotation member so as to cause relative rotation of the first rotation member to the second rotation member. The motor further includes a deformation suppressing part. The electric magnet includes a coil, a core, and an extension part. The coil in the form of a cylindrical shape is configured to extend along a protrusion direction across the rotation axis. The core in the form of a bar shape is configured to penetrate the coil in the protrusion direction. The extension part is made of a magnetic material. The extension part is configured to extend along the rotation axis from an end of the core close to the first rotation member. The deformation suppressing part is configured to suppress deformation of the extension part.

## Description

### Technical Field

The present invention is directed to a motor, a pump including the motor, and a device including the pump.

### Background Art

In the past, as a motor, there has been provided a brushless DC motor disclosed in JP 09-285044 A. The brushless DC motor includes a rotor defined as a rotary part, and a stator defined as a stationary part. The stator includes a yoke comprising multiple iron plates stacked in an upward/rearward direction, and a winding wire wound around the yoke. The yoke is formed into an annular ring, and is provided with a plurality of T-shaped teeth radially protruded from its inner periphery. Attached to respective upper and lower surfaces of the T-shaped tooth is converging pieces. The converging piece is formed into an L-shape by use of a bending technique. Therefore, magnetic flux derived from the rotor magnet is collected by the converging pieces, and the collected magnetic flux is provided to the T-shaped tooth.

However, with regard to the prior motor such as the aforementioned brushless DC motor, in an instance where the stator or a controller for energizing the stator is covered by a molding resin, the converging piece suffers from stress caused by such as forming pressure derived from the molding resin. As a result, the converging piece is likely to be deformed.

### Disclosure of Invention

In view of the above insufficiency, the present invention has been aimed to propose a motor, a pump including the motor, and a device including the pump which are capable of suppressing deformation of the extension part caused by stress such as forming pressure.

The motor of the first aspect in accordance with the present invention includes a first rotation member and a second rotation member. The first rotation member has a predetermined rotation axis. The second rotation member includes a plurality of electric magnets arranged around the rotation axis. The motor is configured to energize the electric magnets of the second rotation member so as to cause relative rotation of the first rotation member to the second rotation member. The motor further includes a deformation suppressing part. The electric magnet includes a coil, a core, and an extension part. The coil in the form of a cylindrical shape is configured to extend along a protrusion direction across the rotation axis. The core in the form of a bar shape is configured to penetrate the coil in the protrusion direction. The extension part is made of a magnetic material. The extension part is configured to extend along the rotation axis from an end of the core close to the first rotation member. The deformation suppressing part is configured to suppress deformation of the extension part.

According to the motor of the second aspect of the preset invention, in addition to the motor as set forth in the first aspect, the motor further includes a partition interposed between the first rotation member and the second rotation member. The deformation suppressing part is defined by a reinforcement member attached to either the partition or the extension part so as to be interposed between the partition and the extension part.

According to the motor of the third aspect in accordance with the present invention, in addition to the motor as set forth in the first or second aspect, the motor further includes a partition interposed between the first rotation member and the second rotation member. The electric magnet includes a coil bobbin made of a dielectric material. The coil bobbin includes a first cover part, a second cover part, and a third cover part. The first cover part is interposed between the core and the coil so as to electrically insulate the core from the coil. The second cover part is configured to extend from an end of the first cover part close to the partition so as to cover an opposite surface of the extension part from the partition. The third cover part is configured to extend from an apex of the second cover part so as to cover an apical surface of the extension part. The deformation suppressing part is defined by a protrusion part extending from an apex of the third cover part toward the partition. The protrusion part has a surface opposite to the partition closer to the partition than a surface of the extension part opposite to the partition is.

According to the motor of the fourth aspect in accordance with the present invention, in addition to the motor as set forth in any one of the first to third aspects, the motor further includes a partition interposed between the first rotation member and the second rotation member. The electric magnet includes a coil bobbin made of a dielectric material. The coil bobbin includes a first cover part, a second cover part, and a third cover part. The first cover part is interposed between the core and the coil so as to electrically insulate the core from the coil. The second cover part is configured to extend from an end of the first cover part close to the partition so as to cover an opposite surface of the extension part from the partition. The third cover part is configured to extend from an apex of the second cover part so as to cover an apical surface of the extension part. The deformation suppressing part is defined by a fitting unit. The fitting unit includes a recess and a protrusion. The recess is provided to one of the apical surface of the extension part and an opposite surface of the third cover part facing the apical surface. The protrusion is provided to the other of the apical surface of the extension part and the opposite surface of the third cover part so as to be fitted into the recess.

According to the motor of the fifth aspect in accordance with the present invention, in addition to the motor as set forth in any one of the first to fourth aspects, the motor further includes a partition interposed between the first rotation member and the second rotation member. The deformation suppressing part is defined by a projection part extending from the partition to be interposed between the electric magnets adjacent to each other.

According to the motor of the sixth aspect in accordance with the present invention, in addition to the motor as set forth in any one of the first to fifth aspects, the deformation suppressing part is defined by a reinforcement member placed on the core so as to be in contact with a surface of the extension part opposite from the first rotation member.

The pump in accordance with the present invention includes a motor defined by any one of the first to sixth aspects.

The device in accordance with the present invention includes the above pump.

### Brief Description of Drawings

FIG. 1 is a cross sectional view illustrating the primary part of the motor in the pump of the first embodiment,
FIG. 2 is an exploded perspective view illustrating the pump of the first embodiment,
FIG. 3 is a cross sectional view of the pump of the first embodiment,
FIG. 4 is an exploded perspective view illustrating the primary part of the stator of the motor in relation to the first embodiment,
FIG. 5 is a perspective view illustrating the core of the motor in relation to the first embodiment,
FIG. 6 is a cross sectional view illustrating the core of the motor in relation to the first embodiment,
FIG. 7 is a cross sectional view illustrating the primary part of the motor in the pump of the second embodiment,
FIG. 8 is a cross sectional view illustrating the primary part of the motor in the pump of the third embodiment,
FIG. 9 is a cross sectional view illustrating the primary part of the motor in the pump of the fourth embodiment,
FIG. 10 is a cross sectional view illustrating the primary part of the motor in the pump of the fifth embodiment,
FIG. 11 is a perspective view illustrating the stator in relation to the fifth embodiment,
FIG. 12 is a plan view of the motor in the pump of the sixth embodiment as viewed from the axial direction,
FIG. 13 is a diagram illustrating the configuration of the device in relation to the seventh embodiment,
FIG. 14 is a diagram illustrating the configuration of the device in relation to the eighth embodiment, and
FIG. 15 is a diagram illustrating the configuration of the device in relation to the ninth embodiment.

### Best mode for Carrying out the Invention

The following explanations referring to drawings are made to respective embodiments in accordance with the present invention.

### (FIRST EMBODIMENT)

The following explanation referring to drawings is made to a pump 1 of the first embodiment.

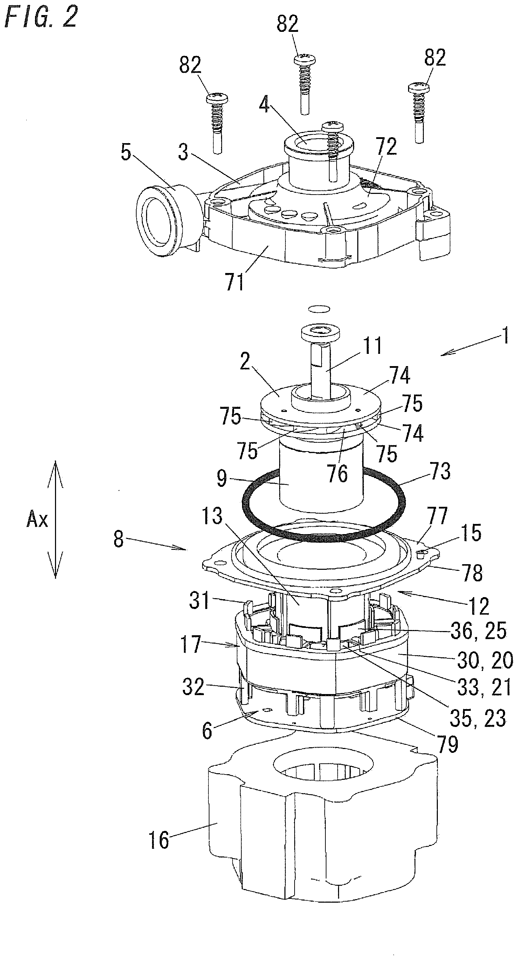

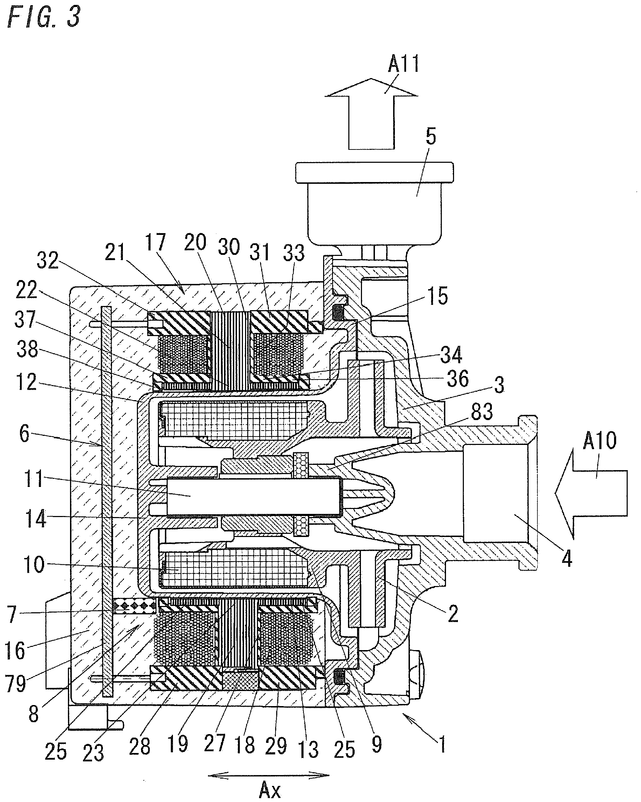

The pump **1** of the present embodiment includes, as shown in FIG. 2 and FIG. 3, a motor (electric motor) **8,** an impeller **2,** a controller **6,** and a case **3.** The motor **8** constitutes a driving source. The impeller **2** is driven by the motor **8** and is designed to move a fluid. The controller **6** is configured to control the motor **8.** The case **3** defines an outer envelope.

The motor **8** includes a stator **17,** a rotor **9,** a separation plate **12,** and an axial member **11.** The controller **6** is configured to energize the stator **17.** The rotor **9** is formed into a cylindrical shape. The rotor **9** is rotated by the stator **17.** The separation plate **12** is configured to separate, from a space in which the rotor **9** exists, a space in which the stator **17** exists. The axial member **11** defines a rotation axle of the rotor **9.**

With relation to the pump **1,** the case **3** and the separation plate **12** constitute a pump room. The pump room is configured to accommodate both the impeller **2** and the rotor **9.** A fluid flows through the pump room.

The case **3** includes a side wall **71,** a ceiling part **72,** an inlet **4,** and an outlet **5.** The side wall **71** is formed into a circular cylindrical shape. The ceiling part **72** is formed into an approximate circular plate shape. The ceiling part **72** is formed at one end (upper end in FIG. 2) of the side wall **71** so as to cover the one end (upper end in FIG. 2). The inlet **4** is formed into a circular tube shape. The inlet **4** is used for suction of a fluid into the pump room. The outlet **5** is formed into a circular tube shape. The outlet **5** is used for discharge of a fluid from the pump room. The case **3** is fastened to a molding part **16** by use of screws **82.**

The inlet **4** protrudes to the outside of the case **3** from an approximate center of the ceiling part **72** approximately concentrically. The outlet **5** protrudes to the outside the case 3 from the side wall **71.** The side wall **71** has the other end (lower end in FIG. 2) which is not covered with the ceiling part **72,** the other end being in indirect contact with the separation plate **12** (detailed explanation thereof is made below) with a sealing member **73** (e.g., an O-ring) interposed therebetween. The impeller **2** is placed inside the side wall **71.**

The impeller **2** includes two shrouds **74** and **74** in the form of a circular disk, and vanes **75** interposed between the two shrouds **74.** The two shrouds **74** are arranged to be opposite to each other approximately concentrically. The vanes **75** divide a space formed between the two shrouds **74** into sections respectively defining fluid channels **76** for a flow of a fluid. The fluid channel **76** has an upstream end at an inner periphery side of the shroud **74,** and has a down stream end at an outer periphery side of the shroud **74.** A fluid is transferred from the inlet **4** into the upstream end, and is transferred from the downstream end into the outlet **5.** Therefore, the rotation of the impeller **2** by the motor **8** causes suction of a fluid into the pump room via the inlet **4** (see arrow A10 in FIG. 3), and the fluid in the pump room receives the centrifugal force and then is drained outside the pump room via the outlet **5** (see arrow A11 in FIG. 3). The impeller **2** is made of a synthetic resin. The impeller **2** and the rotor **9** are formed as a single molded piece.

The rotor **9** is formed into an approximate cylindrical shape. The rotor **9** includes a plurality of magnets **10** arranged in a circumferential direction of the rotor **9.** The axial member **11** approximately concentrically penetrates through the rotor **9.** The rotor **9** is supported by the axial member **11** such that the rotor **9** rotates around its center axis, and is driven by the stator **17** to rotate around the axial member **11.** The impeller 2 (shrouds **74** and **74)** is integrally attached to one end (upper end in FIG. 2) of the rotor **9** approximately concentrically. The rotor **9** and the impeller **2** rotate, as a single part, around the axial member **11.** In the following explanation, unless specific definitions are given, an axial direction Ax of the rotor **9** is simply referred to as the axial direction Ax, and a circumferential direction of the rotor **9** is simply referred to as the circumferential direction, and a direction towards an outer periphery from the center axis of the rotor **9** (in a plane perpendicular to the center axis of the rotor **9)** is simply referred to as a radial outward direction, and a radial inward direction of the rotor **9** (e.g., a direction opposite to the radial outward direction) is simply referred to as the radial inward direction, and they are used as basic directions. Further, for convenience sake, a shape viewed from the axial direction Ax is defined as a front view shape.

The axial member **11** has a first end (upper end in FIG. 2) in the axial direction Ax fixed to an attachment part **83** (see FIG. 3) and a second end (lower end in FIG. 2) fixed to the separation plate **12.** Further, the axial member **11** is fixed so as to allow the rotor **9** to rotate around the axial member **11,** and supports the rotor **9.**

The separation plate **12** is made of a synthetic resin material. The separation plate **12** mainly includes a cylindrical part (partition) **13** having its bottom, and a flange part **15** in the form of a plate shape. The cylindrical part **13** has the bottom **14** to which the axial member **11** is fixed. The flange part **15** extends outward from an open end (right end in FIG. 3) of the cylindrical part **13** along the radial outward direction. The flange part **15** has a plate surface (upper surface in FIG. 2) **77** opposite to the ceiling part **72.** The impeller **2** is placed between the plate surface **77** and the ceiling part **72.** The side wall **71** is in contact with an outer periphery **78** of the plate surface **77.** This configuration forms a space for accommodating the impeller **2.**

The cylindrical part **13** has a cylindrical shape with a diameter greater than the rotor **9.** The rotor **9** and the axial member **11** are approximately concentrically disposed inside the cylindrical part **13.** The stator **17** is placed so as to surround the cylindrical part **13.** The inside of the cylindrical part **13** communicates to the space for accommodating the impeller **2,** and these constitute the pump room.

Further, the controller **6** is placed outside the bottom **14** of the cylindrical part **13** in the axial direction Ax. The part (space) outside the separation plate **12** in which the stator **17** and the controller **6** are placed is covered with the molding part **16.** That is, the stator **17** is enclosed in a resin (molding resin) while being placed in a predetermined position in relation to the separation plate **12.** Therefore, the stator **17** is embedded into the molding part **16.** In the present embodiment, the molding part **16** and the separation plate **12** constitute a housing for the stator **17.** Further, the separation plate **12** and the case **3** constitute a housing for the rotor **9.**

The molding part **16** is mainly made of a molding resin (e.g., a thermoset resin). The molding resin is injected into the part (space) where the stator **17** and the controller **6** are placed, and then is cured. The molding part **16** forms an outer envelope of the pump **1** with regard to the above part. The molding part **16** attaches the stator **17** and the controller **6** to the separation plate **12.** In addition, the molding part **16** improves strength of the separation plate **12** against the pressure applied from the pump room, thereby reinforcing the separation plate **12.**

The controller **6** mainly includes a position detection sensor **7,** electronic parts, and a substrate **79** on which the electronic parts are mounted. The position detection sensor **7** is configured to detect a rotation position of the rotor **9.** For example, the electronic parts include a switching element for controlling electrical energy supplied to the stator **17.** Upon receiving a detection result from the position detection sensor **7,** the controller **6** controls the electrical energy supplied to the stator **17** in order to cause the desired rotation of the motor **8,** thereby operating the pump **1** (impeller **2).**

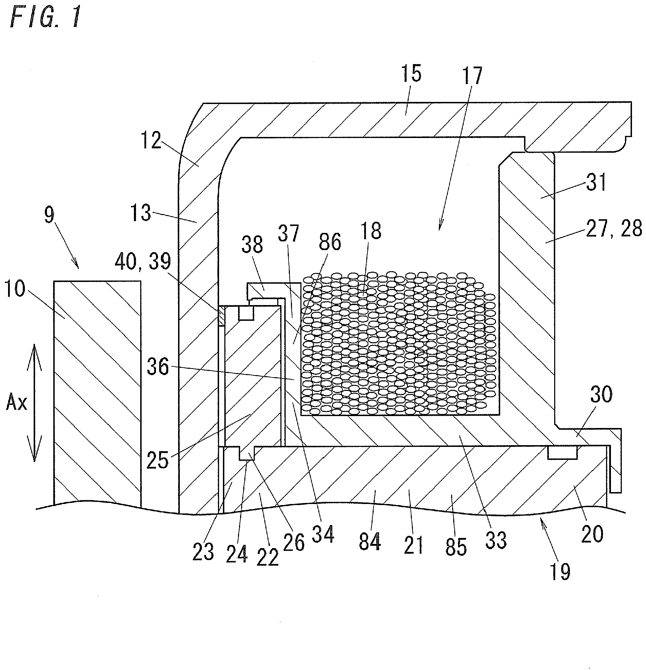

As shown in FIG. 1, the stator **17** includes a stator core (core) **19,** coils **18,** and insulators **27.** The stator core **19** is made of a magnetic material (e.g., a magnetized metal material). The coil **18** is formed by winding a conductive wire around the core **19.** The insulator **27** is configured to electrically insulate the coil **18** from the core **19.**

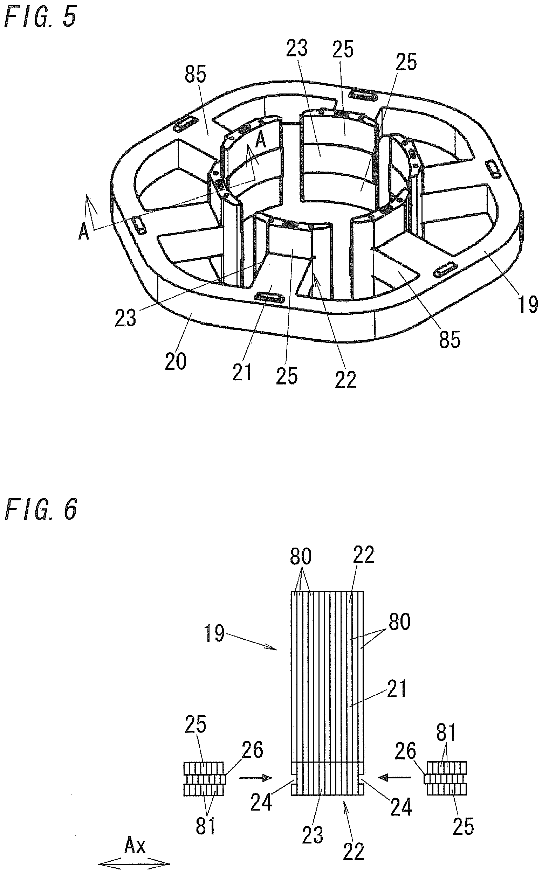

As shown in FIG. 5, the core **19** mainly includes an annular part **20,** teeth **21,** and magnetic pole parts **22.** The annular part **20** has a circular shape and is placed approximately concentrically with the rotor **9.** The respective teeth **21** are protruded from an inner periphery of the annular part **20** along the radial inward direction (towards the rotor **9).** The magnetic pole part **22** is provided at an end of the tooth **21** close to the rotor **9.** The core **19** is formed by means of stacking first plate members (plate bodies) in the axial direction Ax. The first plate member is defined as a divided part including a part of the magnetic pole parts **22,** the annular part **20,** and the teeth **21.**

The tooth **21** is formed into a rectangular pillar shape. The tooth **21** extends from the core **19** in the radial inward direction. The teeth **21** are arranged in a circumferential direction at an approximately equal interval. That is, the teeth **21** are arranged radially. In relation to the respective teeth **21,** a conductive wire constituting the coil **18** is wound around an outer periphery of the tooth **21** which is in the form of the pillar having sides along the protrusion direction, the insulation part **27** being interposed between the conductive wire and the tooth **21.** The magnetic pole part **22** is provided to a protrusion apex defined as the end of the tooth **21** close to the rotor **9.**

The magnetic pole part **22** is in the form of an arc having a dimension greater than the tooth **21** in the circumferential direction. The magnetic pole part **22** in the form of the arc is placed approximately concentrically with respect to the rotor **9,** and has a dimension approximately same as the magnet **10** of the rotor **9** in the axial direction Ax. Therefore, the inner periphery of the magnetic pole part **22** in the form of the arc is defined as a magnetic pole surface opposite to the outer periphery of the rotor **9** across the cylindrical part **13** in the radial inward direction.

Further, as shown in FIG. 6, the magnetic pole part **22** mainly includes a base part **23** and extension parts **25.** The base part **23** is connected to the protrusion apex of the tooth **21.** The extension parts **25** are attached to the respective opposite ends of the base part **23** in the axial direction Ax. The two extension parts **25** are provided for each base part **23.**

As shown in FIG. 5, the base part **23** is connected to the tooth **21** at the approximate center in the circumference direction of the base plate **23** in the form of the arc. The base part 23 has the approximately same dimension as the tooth **21** in the axial direction Ax. The respective opposite ends of the base part **23** having the approximately same dimension are protruded from a portion of the base part **23** connected to the tooth **21** in the circumferential direction. Therefore, the base parts **23** are formed integrally with both the core **19** and the teeth **21** by means of stacking the first plate members in the axial direction Ax.

Further, as shown in FIG. 6, the base part **23** is provided in the opposite end surfaces (right and left surfaces in FIG. 6) in the axial direction Ax with recessed portions **24** which are recessed in the axial direction Ax from the respective end surfaces. The recessed portion **24** is used as a positioning recess for attaching the extension part **25** to the base part **23.** By fitting a protrusion portion **26** provided to the extension part **25** into the recessed portion **24,** the extension part **25** is positioned in relation to the end surface of the base part **23,** and is attached to the end surface of the base part **23.**

The extension part **25** is formed by means of stacking second plate members (plate bodies) **81** (see FIG. 6) in the axial direction Ax. The second plate member **81** is in the form of an arc having the approximately same dimensions as the base part **23.** The second plate member has the different shape from the first plate member **80** constituting the base part **23.** As shown in FIG. 1, interposed between an inner periphery of the extension part **25** and the outer periphery of the cylindrical part **13** in the radial direction is a reinforcement member **40** as a deformation suppressing part **39.**

The reinforcement member **40** is attached to the extension part **25** such that an end (right end in FIG. 1) of the reinforcement member **40** in the radial outward direction is in contact with the magnetic pole surface near an extension apex of the extension part **25,** and that an opposite end (left end in FIG. 1) of the reinforcement member **40** in the radial inward direction is close to the separation plate **12** and is spaced from the separation plate **12** at a predetermined gap. When the extension part **25** is pressed in the radial inward direction, the aforementioned end (left end in FIG. 1) of the reinforcement member 40 in the radial inward direction comes into contact with the separation plate **12.** Therefore, the deformation of the extension part **25** towards the separation plate **12** (the radial inward direction) can be suppressed. That is, the reinforcement member **40** comes into contact with the separation plate **12** (cylindrical part **13)** before the extension part **25** does. Consequently, the deformation that the extension part **25** comes into contact with the separation plate **12** (cylindrical part **13)** can be prevented. In addition, preferably, the reinforcement member **40** is formed integrally with the extension part **25.** In this arrangement, it is possible to reduce the number of parts for assembling the motor and/or steps for manufacturing the same.

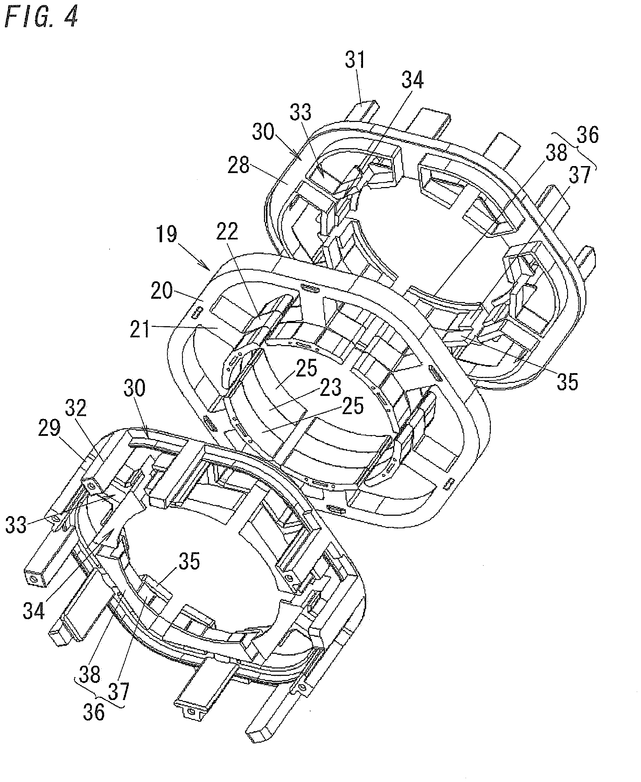

As shown in FIG. 1 and FIG. 4, the insulation part **27** mainly includes an annular cover part **30,** tooth cover parts **33,** and magnetic pole cover parts **34.** The annular cover part **30** is formed into a circular ring shape. The tooth cover part **33** formed into a cylindrical shape is protruded from the annular cover part **30** in the radial inward direction. The magnetic pole cover part **34** is provided at an end of the tooth cover part **33** close to the rotor **9** (in the radial inward direction). In relation to the insulation part **27,** the annular cover part **30,** the tooth cover parts **33,** and the magnetic pole cover parts **34** are formed as a single part by use of an electrically insulation resin. The insulation part **27** electrically insulates the coil **18** from the core **19.**

The annular part **20** is placed in an inside space of the annular cover part **30.** The annular cover part **30** covers the outer periphery of the annular part **20.** The annular cover part **30** is provided, on its outer surface (upper surface in FIG. 2) close to the flange part **15** in the axial direction Ax, with level determining legs **31** protruded from the outer surface along the axial direction Ax. The annular cover part **30** is provided with supporting legs **32** on its opposite outer surface (lower surface in FIG. 2). The level determining leg **31** is in contact with the plate surface (lower surface in FIG. 2) of the flange part **15.** Therefore, the position of the stator **17** is fixed in the axial direction Ax. Further, the magnetic pole surface is held at the approximately same level as the magnet **10** in the axial direction Ax. The supporting leg **32** is configured to support the substrate **79** of the controller **6.** Therefore, the supporting leg **32** can prevent the deformation of the substrate **79** which would otherwise occur due to the forming pressure. The supporting legs **32** define the position of the position detection sensor **7.**

The tooth **21** is placed inside the tooth cover part **33.** The tooth cover part **33** covers the outer periphery of the tooth **21.** The conductive wire is wound around the outer periphery of the tooth cover part **33,** and the coil **18** is placed outside the tooth cover part **33.**

The magnetic pole cover part **34** includes a base part cover portion **35** and an extension part cover portion **36.** The base part cover portion **35** is protruded from the end of the tooth cover part **33** close to the rotor **9** in the circumferential direction. The extension part cover portion **36** extends, along the axial direction Ax, from an end of the base part cover portion **35** in the axial direction Ax. The base part cover portion **35** is configured to cover the outer periphery of the base part **23** in the form of the arc.

The extension part cover portion **36** includes an outer periphery cover section **37** and an apical surface cover section **38.** The outer periphery cover section **37** extends from the base part cover portion **35** in the axial direction Ax so as to cover the outer periphery of the extension part **25.** The apical surface cover section **38** is protruded, along the radial inward direction, from the apex of the outer periphery cover section **37** in the axial direction Ax so as to cover an apical surface of the extension part **25** in the axial direction Ax.

The outer periphery cover section **37** is disposed to be in contact with or be close to the outer periphery of the extension part **25.** The outer periphery cover section **37** facilitates the decrease in the stress (e.g., the forming or molding pressure) on the outer periphery of the extension part **25.** The apical surface cover section **38** is disposed to be in contact with or be close to the apical surface of the extension part **25.** The apical surface cover section 38 facilitates the decrease in the stress (e.g., the forming pressure) on the apical surface of the extension part **25.**

Further, as shown in FIG. 4, the insulation part **27** is mainly constituted by two insulation members **(28** and **29).** The insulation members are defined by parts obtained by means of dividing the cover parts **30, 33,** and **34** into halves by a plane along all the radial directions. One of the two insulation members is a first member **28,** and the other is a second member **29.** The first member **28** defines a first outer surface (upper surface in FIG. 2) of the cover parts **30, 33,** and **34** in the axial direction Ax. The second member **29** defines a second outer surface (lower surface in FIG. 2) of the cover parts in the axial direction Ax. That is, the first member **28** is provided with the level determining legs **31** on its surface corresponding to the outer surface of the annular cover part **30.** The second member **29** is provided with the supporting legs **32** on its surface corresponding to the outer surface of the annular cover part **30.**

In other words, the stator **17** includes a plurality of electric magnets **84** and the annular part (yoke) **20.** The plurality of the electric magnets **84** are arranged around the rotation axis of the rotor **9.** In the present embodiment, the six electric magnets **84** are arranged around the rotation axis of the rotor **9** symmetrically. Each of the electric magnets **84** includes the coil **18** formed into a cylindrical shape, a core (pole) **85** formed into a bar shape, the two extension parts **25,** and the coil bobbin **86.**

The coil **18** is a solenoid which extends along the protrusion direction across the rotation axis of the rotor **9.** In the present embodiment, the protrusion direction is perpendicular to the rotation axis of the rotor **9.**

The core **85** is designed to extend through the coil **18** in the protrusion direction. In the present embodiment, the core **85** includes the tooth **21** and the base part **23.**

The extension part **25** is made of a magnetic material. The extension part **25** is formed to extend, along the rotation axis, from the end (left end in FIG. 1) of the core **85** close to the first rotation member (rotor **9).**

The coil bobbin **86** includes a first cover part (tooth cover part) **33,** two second cover parts (outer periphery cover sections) **37,** and two third cover part (apical surface cover sections) **38.** The first cover part **33** is interposed between the core **85** and the coil **18** so as to electrically insulate the core **85** from the coil **18.** The second cover part **37** is configured to extend from the end (left end in FIG. 1) of the first cover part **33** close to the partition **13** so as to cover the opposite surface (right surface in FIG. 1) of the extension part **25** from the partition **13.** The third cover part **38** is configured to extend from the apex of the second cover part **37** so as to cover the apical surface of the extension part **25.** In the present embodiment, the coil bobbin **86** includes the tooth cover part **33** and the magnetic pole cover part **34.**

As described in the above, with providing the extension part **25,** the tooth **21** can have a dimension smaller than the magnetic pole surface in the axial direction Ax. Therefore, it is possible to reduce the increase in the size of the coil **18** (e.g., the increase in the winding width of the conductive wire) caused by the increase in the size of the tooth **21.** Therefore, it is possible to ensure the winding wire region in which the conductive wire is wound around the tooth **21.** Consequently, it is enabled to suppress the increase in the size of the motor **8.** In addition, the extension part **25** is formed by means of stacking the plate bodies (second plate members) **81.** For example, even if the stress is applied to the extension part **25** in the radial inward direction at the time of the formation of the coil **18** in which the conductive wire is wound, the deformation of the extension part **25** can be suppressed.

Further, since the stator **17** is fixed to the separation plate **12** by the molding part **16** and the separation plate **12** is reinforced by the molding unit **16,** it is enabled to thin the cylindrical part **13.** Thus, it is possible to decrease an air gap between the stator **17** and the rotor **9.** The controller **6** and the stator **17** which are energized while the pump is in operation are separated from the pump room by the separation plate **12** and are enclosed by the molding part **16.** Therefore, it is possible to suppress that the controller **6** and the stator **17** suffer from infiltration of moisture (e.g., external humidity), a fluid in the pump room, and the like.

In the process of forming the molding part **16,** the stator **17** is likely to receive the stress such as the forming pressure (hereinafter, referred to as the mold forming pressure) caused by the filling of the molding resin. Therefore, this stress may cause the deformation of the extension part **25** and/or the separation of the extension part **25** from the base part **23.**

The motor **8** of the pump **1** in accordance with the present embodiment is a motor (electric motor) including the stator **17** and the rotor **9** configured to be rotated by the stator **17.** With regard to the motor **8,** the rotor **9** has its periphery (outer periphery) extending along its rotation direction. The stator **17** includes the core (stator core) **19,** the coils **18,** and the insulation parts **27.** The core **19** is formed by means of stacking the plural plate bodies (the first plate members **80** and the second plate members **81).** The coil 18 is formed by means of winding the conductive wire around the core **19.** The insulation part **27** is configured to electrically insulate the coil **18** from the core **19.** The core **19** includes the magnetic pole part **22** facing the periphery (outer periphery) of the rotor **9.** The magnetic pole part **22** is provided with the extension part **27** provided at its end in the axial direction (upward/rearward direction in FIG. **1**) Ax of the rotation axis of the rotor **9,** the extension part **27** extending along the axial direction Ax. The motor **8** further includes the deformation suppressing part **39** configured to suppress the deformation of the extension part **25.**

In other words, the motor **8** of the present embodiment includes the rotor (first rotation member) **9** and the stator (second rotation member) **17.** The first rotation member **9** has the predetermined rotation axis. The second rotation member **17** includes the plurality of the electric magnets **84** arranged around the rotation axis. The motor **8** is configured to energize the electric magnets **84** of the stator (second rotation member) **17** so as to cause relative rotation of the rotor (first rotation member) **9** to the stator (second rotation member) **17.** The motor 8 further includes the deformation suppressing part **39.** The electric magnet **84** includes the coil **18** in the form of the cylindrical shape, the core **85** (the tooth **21** and the base part **23)** in the form of the bar shape, and the extension part **25** made of the magnetic material. The coil **18** is configured to extend along the protrusion direction (the radial inward direction in the present embodiment) across the rotation axis. The core **85** is configured to penetrate the coil **18** in the protrusion direction. The extension part **25** is configured to extend along the rotation axis from the end of the core **85** close to the rotor **9.** The deformation suppressing part **39** is configured to suppress the deformation of the extension part **25.**

Therefore, it is possible to suppress the deformation of the extension part **25** which would otherwise occur due to the stress such as the forming pressure.

Especially, in the present embodiment, the motor **8** further includes the separation part **12.** The separation part **12** is interposed between the rotor **9** and the stator **17** in the radial direction of the rotation axis so as to separate the space in which the rotor **9** is disposed from the space in which the stator is disposed. The deformation suppressing part **39** is placed between the separation part **12** and the extension part **25** in the radial direction.

That is, the motor **8** further includes the partition (cylindrical part) **13** interposed between the rotor (first rotation member) **9** and the stator (second rotation member) **17.** The deformation suppressing part **39** is defined by the reinforcement member **40** attached to the extension part **25** so as to be interposed between the partition **13** and the extension part **25.**

Thus, in the motor **8** of the present pump **1,** with disposing the reinforcement member **40** between the extension part **25** and the separation plate **12** in the radial direction, the reinforcement member **40** acts as the deformation suppressing part **39** and therefore can reduce the influence of the stress such as the forming pressure. In more detail, when the stress (e.g., the forming pressure) from the radial outward direction is applied to the extension part **25,** the reinforcement member **40** comes into contact with the separation plate **12.** Therefore, it is possible to suppress the deformation of the extension part **25** and the separation of the extension part **25** from the base part **23.** Namely, when the extension part **25** is pressed toward the partition **13,** the reinforcement member **40** comes into contact with the cylindrical part **13** of the separation plate **12** before the extension part **25** does. Consequently, it is possible to prevent that the extension part **25** is deformed until it comes into contact with the cylindrical part **13.** Therefore, for example, it is enabled to improve the stability of the magnetic flux flowing between the stator **17** (the extension part **25)** and the rotor **9.** Consequently, it is possible to improve the motor performance and the pump performance. Further, since the insulation part **27** includes the magnetic pole cover part 34 and the magnetic cover part **34** includes the extension part cover portion **36,** it is possible to reduce the stress (e.g., the mold forming pressure) applied on the extension part **25.** Thus, the deformation of the magnetic pole part **22** caused by the stress can be easily suppressed.

Besides, as long as the reinforcement member **40** can act as the aforementioned deformation suppressing part **39,** the number, the position, and the shape thereof are optional and thus are not limited to the aforementioned instance. For example, the reinforcement member **40** may be provided to a part of the magnetic pole surface near the extension apex of the extension part **25,** and the plural reinforcement members **40** may be arranged in the circumferential direction at predetermined intervals. The reinforcement member **40** may be provided to all the extension parts **25.** Alternatively, the reinforcement member **40** may be provided to only the extension part **25** which easily suffers from the above stress. Alternatively, the deformation suppressing part **39** may be the reinforcement member **40** attached to the partition **13** so as to be interposed between the partition **13** and the extension part **25.**

The extension part **25** may be attached to the base part **23** by use of a method other than the fit of the protrusion portion **26** and the recessed portion **24.** The extension part **25** may be attached to the base part **23** by use of the so-called swaging process (hammering and fastening process), the fixing member (e.g., a pin), the laser welding process, or an adhesive, for example. The method for attaching the extension part **25** to the base part **23** is not limited to the above instances.

The pump **1** is not limited to a volute pump as illustrated in FIG. 3. Obviously, the pump **1** may be a vortex pump. The pump **1** is not limited to a centrifugal pump, but may be an axial pump configured to move a fluid in the axial direction Ax. The pump **1** is not limited to the aforementioned instances. The motor **8** is not limited to a so-called inner rotor motor in which the rotor **9** is placed inside the stator **17** as mentioned in the present embodiment. The motor **8** may be a so-called outer rotor motor in which the rotor **9** is placed outside the stator **17.** The motor **8** is not limited to the aforementioned instances. The material of the separation plate **12** is not limited to a resin but may be a metal.

According to the motor **8** of the present embodiment, the rotor **9** defines the first rotation member having the predetermined rotation axis, and the stator **17** defines the second rotation member including the plurality of the electric magnets arranged around the rotation axis of the rotor **9.** The motor **8** is configured to energize the electric magnets of the second rotation member (the stator **17)** so as to cause relative rotation of the first rotation member (the rotor **9)** to the second rotation member (the stator **17).** In contrast, with regard to the motor **8,** the stator **17** may define the first rotation member having the predetermined rotation axis, and the rotor **9** may define the second rotation member including the plurality of the electric magnets arranged around the rotation axis of the stator **17.** With this arrangement, the motor **8** is configured to energize the electric magnets of the second rotation member (the rotor **9)** so as to cause relative rotation of the first rotation member (the stator **17)** to the second rotation member (the rotor **9).** Besides, also in the following second to ninth embodiments, the stator **17** may define the first rotation member having the predetermined rotation axis, and the rotor **9** may define the second rotation member including the plurality of the electric magnets arranged around the rotation axis of the stator **17.**

### (SECOND EMBODIMENT)

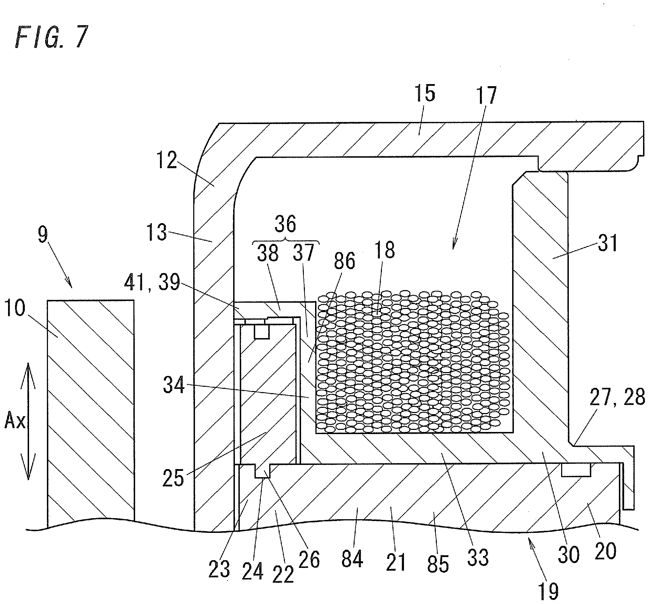

The following explanation referring to FIG. 7 is made to the pump **1** in accordance with the second embodiment. The components common to the first embodiment and/or the members equivalent to the first embodiment are designated by the same reference numerals, and explanations thereof are deemed unnecessary. The definitions concerning the directions are same as the first embodiment.

The motor **8** of the pump **1** in accordance with the present embodiment includes a protrusion part **41** as the deformation suppressing part **39.** The protrusion part **41** is formed at an end of the apical surface cover section **38** of the insulation part **27** in the radial inward direction, and extends along the radial inward direction. The protrusion part **41** has a protrusion end which is defined as an end in the radial inward direction. The protrusion end is close to the cylindrical part **13.** When the mold forming pressure is applied on the stator **17,** the protrusion end comes in contact with the cylindrical part **13.** Namely, when the extension part **25** is pressed toward the partition **13,** the protrusion part **41** comes into contact with the cylindrical part **13** of the separation plate **12** before the extension part **25** does. Consequently, it is possible to prevent that the extension part **25** is deformed until it comes into contact with the cylindrical part **13.**

The motor **8** of the present embodiment includes, as the deformation suppressing part **39,** the protrusion part **41** protruded from the insulation part **27** toward the separation plate **12.** In other words, the motor **8** of the present embodiment further includes the partition (cylindrical part) **13** interposed between the rotor (first rotation member) **9** and the stator (second rotation member) **17.** The electric magnet **84** includes the coil bobbin **86** made of a dielectric material (electrical insulation material). The coil bobbin **86** includes the first cover part (tooth cover part) **33,** the two second cover parts (outer periphery cover sections) **37,** and the two third cover parts (apical surface cover sections) **38.** The first cover part **33** is interposed between the core **85** and the coil **18** so as to electrically insulate the core **85** from the coil **18.** The second cover part **37** is configured to extend from the end (left end in FIG. 7) of the first cover part **33** close to the partition **13** so as to cover the opposite surface (right surface in FIG. 7) of the extension part 25 from the partition **13.** The third cover part **38** is configured to extend from the apex of the second cover part **37** so as to cover the apical surface of the extension part **25.** The deformation suppressing part **39** is defined by the protrusion part **41** extending from the apex of the third cover part **38** toward the partition (cylindrical part) **13.** The protrusion part **41** has its surface opposite to the partition (cylindrical part) **13** closer to the partition **13** than the surface of the extension part **25** opposite to the partition **13** is.

As mentioned in the above, with providing the protrusion part **41** to the insulation part **27,** it is possible to suppress the deformation of the extension part **25** caused by the mold forming pressure and the separation of the extension part **25** from the base part **23** due to the mold forming pressure or the like. Consequently, the motor performance and the pump performance can be improved.

Besides, as long as the protrusion part **41** can act as the aforementioned deformation suppressing part **39,** the number, the position, and the shape thereof are optional and thus are not limited to the aforementioned instance.

### (THIRD EMBODIMENT)

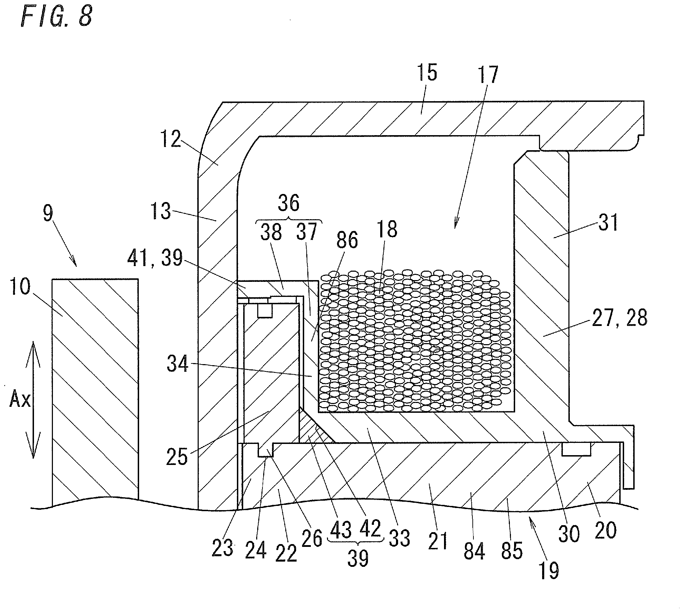

The following explanation referring to FIG. 8 is made to the pump **1** in accordance with the third embodiment. The components common to the second embodiment and/or the members equivalent to the second embodiment are designated by the same reference numerals, and explanations thereof are deemed unnecessary. The definitions concerning the directions are same as the first embodiment.

The motor **8** of the pump **1** in accordance with the present embodiment includes a hollow **42** in the end (end of the extension part cover portion **36** close to the base part **23)** of the tooth cover part **33** of the insulation part **27** in the radial inward direction. Placed in the hollow **42** is a second reinforcement member **43.**

The cross sectional shape of the second reinforcement member **43** along the radial direction is approximately right triangle. The second reinforcement member **43** is in contact with the outer periphery of the extension part **25** near the end close to the base part **23,** the side of the tooth **21,** and the inner face of the hollow **42.** Therefore, the hollow **42** and the second reinforcement member **43** suppress that the extension part **25** is deformed in the radial outward direction at its end close to the base part **23.** Consequently, the hollow **42** and the second reinforcement member **43** acts as the deformation suppressing part **39.** That is, the reinforcement member **43** is in contact with the surface (surface of the extension part **25** opposite from the rotor **9)** of the extension part **25** close to the coil **18.** Therefore, even if the extension part **25** is pressed toward the coil **18,** the deformation of the extension part **25** to the coil **18** can be suppressed. Besides, the reinforcement member **43** may be placed apart from the surface of the extension part **25** close to the coil **18** by a predetermined interval. The predetermined interval is selected from a range in which the reinforcement member **43** can suppress the deformation of the extension part **25.**

In the motor **8** of the present embodiment, the reinforcement member (second reinforcement member) **43** is provided as the deformation suppressing part **39.** The second reinforcement member **43** is disposed on the side of the extension part **25** close to the coil **18.** Namely, in the motor **8** on the present embodiment, the deformation suppressing part **39** is defined by the reinforcement member **43** placed on the core **85** so as to be in contact with the surface (right surface in FIG. 8) of the extension part **25** opposite from the rotor (first rotation member) **9.**

As mentioned in the above, with providing the hollow **42** to the insulation part **27** and placing the reinforcement member in the hollow **42,** it is possible to suppress the deformation of the extension part **25** in the radial direction and the separation of the extension part **25** from the base part **23.** Consequently, the motor performance and the pump performance can be improved.

In addition, preferably, the second reinforcement member **43** is formed integrally with the extension part **25.** In this arrangement, it is possible to reduce the number of parts for assembling the motor and/or steps for manufacturing the motor. With forming the second reinforcement member **43** integrally with the extension part **25,** it is possible to improve the magnetic force acting on the rotor **9** from the extension part **25,** for example.

Besides, as long as the second reinforcement member **43** (and the hollow **42)** can act as the aforementioned deformation suppressing part **39,** the number, the position, and the shape thereof are optional and thus are not limited to the aforementioned instance.

### (FOURTH EMBODIMENT)

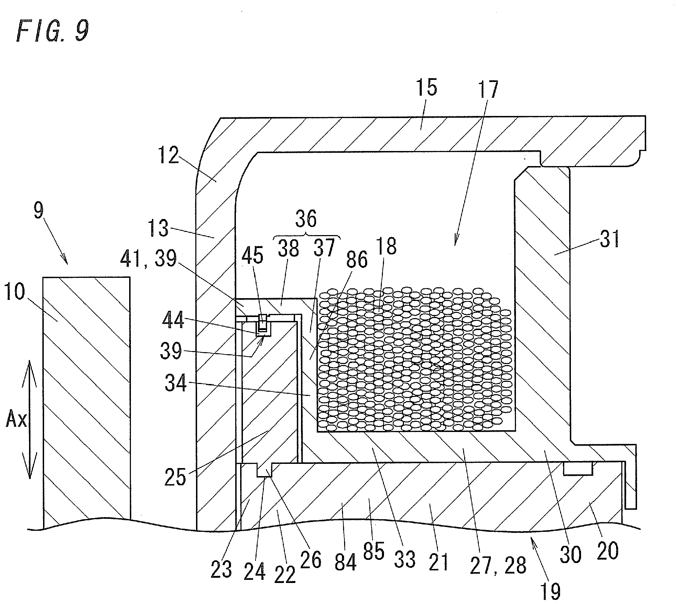

The following explanation referring to FIG. **9** is made to the pump **1** in accordance with the fourth embodiment. The components common to the second embodiment and/or the members equivalent to the second embodiment are designated by the same reference numerals, and explanations thereof are deemed unnecessary. The definitions concerning the directions are same as the first embodiment.

With regard to the motor **8** of the pump **1** in accordance with the present embodiment, the extension part **25** includes a recess part **44** and the apical surface cover section **38** includes a protrusion part **45.** The recess part **44** is formed in the apical surface of the extension apex of the extension part **25.** The recess part **44** is recessed in the axial direction Ax. The protrusion part **45** is formed on the inner face of the apical surface cover section **38** opposite to the apical surfaces. The protrusion part **45** is protruded in the axial direction Ax. The recess part **44** is configured to receive the protrusion part **45** in the axial direction Ax, and therefore the recess part **44** and the protrusion part **45** constitute a fitting unit. The fitting unit acts as the deformation suppressing part **39** configured to suppress the deformation of the extension part **25.** The deformation of the extension part **25** is suppressed by the contact of the protrusion part **45** to the inner surface of the recess part **44.**

The motor **8** of the present embodiment includes, as the deformation suppressing part 39, the fitting unit including fitting parts configured to engage with each other, one of the fitting parts being provided to the apical surface of the extension part **25,** and the other of the fitting parts being provided to the insulation part **27.** Namely, in the motor **8** of the present embodiment, the electric magnet **84** includes the coil bobbin **86** made of a dielectric material. The coil bobbin **86** includes the first cover part (tooth cover part) **33,** the two second cover parts (outer periphery cover sections) **37,** and the two third cover parts (apical surface cover sections) **38.** The first cover part **33** is interposed between the core **85** and the coil **18** so as to electrically insulate the core **85** from the coil **18.** The second cover part **37** is configured to extend from the end (left end in FIG. **9****)** of the first cover part **33** close to the partition **13** so as to cover the opposite surface (right surface in FIG. **9****)** of the extension part **25** from the partition **13.** The third cover part **38** is configured to extend from the apex of the second cover part **37** so as to cover the apical surface of the extension part **25.** The deformation suppressing part **39** is defined by the fitting unit. The fitting unit includes the recess (recess part) **44** and the protrusion (protrusion part) **45.** The recess **44** is provided to the apical surface of the extension part **25.** The protrusion **45** is provided to the opposite surface of the third cover part **38** facing the apical surface of the extension part **25.** The protrusion **45** is configured to be fitted into the recess **44.**

As mentioned in the above, with providing the fitting unit as the deformation suppressing part **39,** it is possible to suppress the deformation of the extension part **25** in the radial direction and the circumferential direction and the separation of the extension part **25** from the base part **23.** Consequently, it is possible to improve the motor performance and the pump performance.

Besides, as long as the fitting unit can act as the aforementioned deformation suppressing part **39,** the number, the position, and the shape thereof are optional and thus are not limited to the aforementioned instance.

### (FIFTH EMBODIMENT)

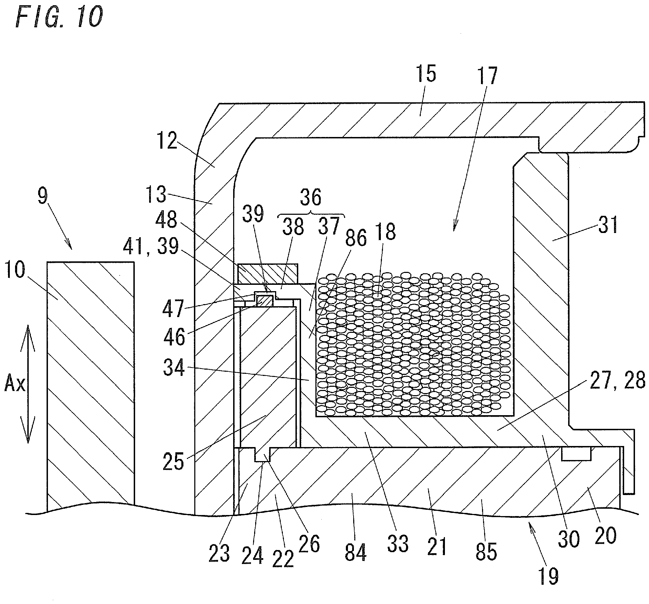

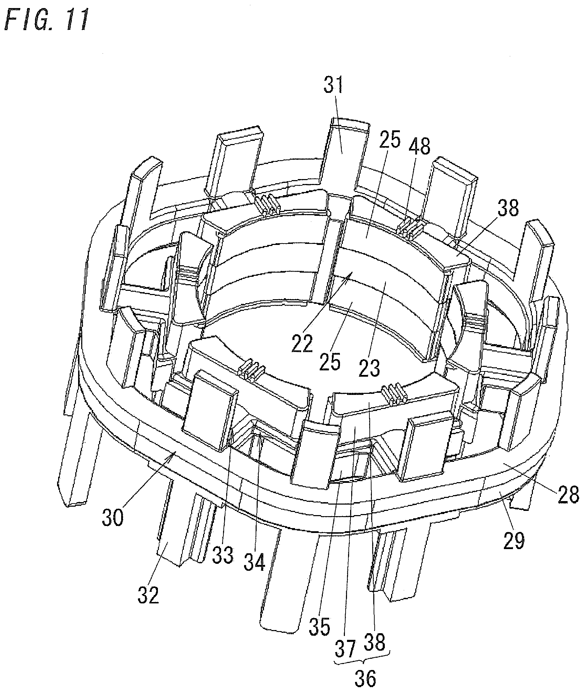

The following explanation referring to FIG. 10 and FIG. 11 is made to the pump **1** in accordance with the fifth embodiment. The components common to the second embodiment and/or the members equivalent to the second embodiment are designated by the same reference numerals, and explanations thereof are deemed unnecessary. The definitions concerning the directions are same as the first embodiment.

With regard to the motor **8** of the pump **1** in accordance with the present embodiment, the extension part **25** includes a protrusion part **46** and the apical surface cover section **38** includes a recess part **47.** The protrusion part **46** is formed on the apical surface of the extension apex of the extension part **25.** The protrusion part **46** is protruded in the axial direction Ax. The recess part **47** is formed in the inner face of the apical surface cover section **38** opposite to the apical surface. The recess part **47** is recessed in the axial direction Ax. The recess part **47** is configured to receive the protrusion part **46** in the axial direction Ax, and therefore the recess part **47** and the protrusion part **46** constitute a fitting unit. The fitting unit acts as the deformation suppressing part **39** configured to suppress the deformation of the extension part **25.** The deformation of the extension part **25** is suppressed by the contact of the protrusion part **46** to the inner surface of the recess part **47.**

In addition, as shown in FIG. 11, the apical surface cover section **38** is provided, on its outer surface, with ribs **48** protruding in the axial direction Ax. The outer surface is opposite to the surface provided with the recess part **47** in the axial direction Ax. Each rib **48** is provided to reinforce a part of the apical surface cover section **38** which is thinned due to the existence of the recess part **47.**

The motor **8** of the present embodiment includes, as the deformation suppressing part **39,** the fitting unit including fitting parts configured to engage with each other, one of the fitting parts being provided to the apical surface of the extension part **25,** and the other of the fitting parts being provided to the insulation part **27.** Namely, in the motor **8** of the present embodiment, the electric magnet **84** includes the coil bobbin **86** made of a dielectric material. The coil bobbin **86** includes the first cover part (tooth cover part) **33,** the two second cover parts (outer periphery cover sections) **37,** and the two third cover parts (apical surface cover sections) **38.** The first cover part **33** is interposed between the core **85** and the coil **18** so as to electrically insulate the core **85** from the coil **18.** The second cover part **37** is configured to extend from the end (left end in FIG. 10) of the first cover part **33** close to the partition **13** so as to cover the opposite surface (right surface in FIG. 10) of the extension part **25** from the partition **13.** The third cover part **38** is configured to extend from the apex of the second cover part **37** so as to cover the apical surface of the extension part **25.** The deformation suppressing part **39** is defined by the fitting unit. The fitting unit includes the recess (recess part) **47** and the protrusion (protrusion part) **46.** The recess **47** is provided to the apical surface of the extension part **25.** The protrusion **46** is provided to the opposite surface of the third cover part **38** facing the apical surface of the extension part **25.** The protrusion **46** is configured to be fitted into the recess **47.**

As mentioned in the above, with providing the fitting unit as the deformation suppressing part **39,** it is possible to suppress the deformation of the extension part **25** in the radial direction and the circumferential direction and the separation of the extension part **25** from the base part **23.** Consequently, it is possible to improve the motor performance and the pump performance.

The motor **8** may be devoid of the ribs **48.** The number, the position, and the shape of the ribs **48** may be appropriately selected in consideration of the stress (e.g., the mold forming pressure) on the insulation part **27** and the shape of the fitting unit, and thus are not limited to the aforementioned instance. Besides, as long as the fitting unit can act as the aforementioned deformation suppressing part **39,** the number, the position, and the shape thereof are optional and thus are not limited to the aforementioned instance.

As apparent from the fourth and fifth embodiments, the deformation suppressing part **39** may be defined by a fitting unit including a recess provided to one of the apical surface of the extension part **25** and the opposite surface of the third cover part **38** facing the apical surface and a protrusion provided to the other of the apical surface of the extension part **25** and the opposite surface of the third cover part **38** so as to be fitted into the recess.

### (SIXTH EMBODIMENT)

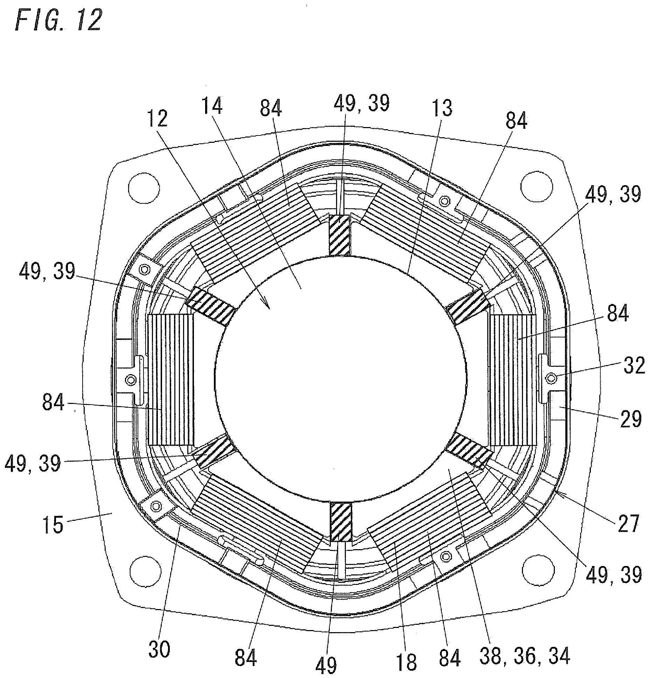

The following explanation referring to FIG. 12 is made to the pump **1** in accordance with the sixth embodiment. The components common to the first embodiment and/or the members equivalent to the first embodiment are designated by the same reference numerals, and explanations thereof are deemed unnecessary. The definitions concerning the directions are same as the first embodiment.

The motor **8** of the pump **1** in accordance with the present embodiment includes plural (six in the present embodiment) projection parts **49** projected from the outer periphery of the cylindrical part **13** in the radial outward direction. The plural projection parts **49** are provided to the cylindrical part **13** so as to be arranged along the circumferential direction at approximately equal intervals. Each projection part **49** is positioned between the adjacent magnetic pole parts **22** in the circumferential direction. For example, the projection part **49** decreases an amount of the molding resin injected into a space between the adjacent magnetic pole parts **22** in the circumferential direction. Consequently, the projection part **49** acts as the deformation suppressing part **39** suppressing the deformation of the magnetic pole part **22** in the circumferential direction.

The motor **8** of the present embodiment includes, as the deformation suppressing part **39,** the projection part **49** projected from the separation plate **12** to be positioned between the magnetic pole parts **22** in the circumferential direction with regard to the rotation axis. In other words, the motor **8** of the present embodiment further includes the partition **13** interposed between the rotor (first rotation member) **9** and the stator (second rotation member) **17.** The deformation suppressing part **39** is defined by the projection part **49** extending from the partition **13** to be interposed between the electric magnets **84** adjacent to each other.

As mentioned in the above, with providing the projection part **49** as the deformation suppressing part **39,** it is possible to suppress the deformation of the extension part **25** in the circumferential direction and the separation of the extension part **25** from the base part **23.** Consequently, it is possible to improve the motor performance and the pump performance.

Besides, as long as the projection part **49** can act as the aforementioned deformation suppressing part **39,** the number, the position, and the shape thereof are optional and thus are not limited to the aforementioned instance.

The deformation suppressing part **39** is not limited to one of the configurations illustrated in the respective embodiments. The motor may include a combination of the deformation suppressing parts **39** (i.e., the reinforcement member **40** of the first embodiment, the protrusion part **41** of the second embodiment, the second reinforcement member **43** of the third embodiment, the recess part **44** and the protrusion part **45** of the fourth embodiment, the protrusion part **46** and the recess part **47** of the fifth embodiment, and the projection part **49** of the sixth embodiment) of the respective embodiments.

### (SEVENTH EMBODIMENT)

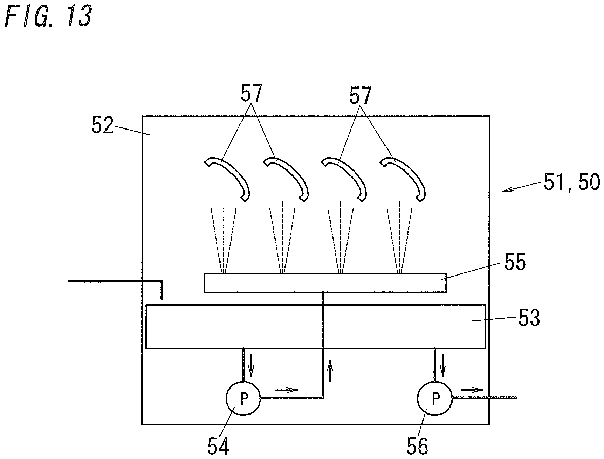

The following explanation referring to FIG. 13 is made to the device **50** in accordance with the seventh embodiment. The components common or equivalent to the pump **1** of any one of the above first to sixth embodiments are designated by the same reference numerals, and explanations thereof are deemed unnecessary. The definitions concerning the directions are same as the first embodiment.

The device **50** of the present embodiment is a dishwasher **51,** for example. The dishwasher **51** is configured to wash dishes **57** with cleaning liquid (e.g., hot water, cold water, or a mixture of detergent and hot water or cold water). The dishwasher **51** supplies the cleaning liquid from the storage tank **53** to a nozzle **55** by use of a wash water pump **54,** and sprays cleaning liquid via the nozzle **55** into a storage space **52** for storing dishes **57.** In this way, the dishwasher **51** washes dishes **57** placed inside the storage space. In relation to the dishwasher **51,** the storage tank **53** is disposed under the storage space **52.** Therefore, after sprayed into the storage space **52,** the cleaning liquid flows into the storage tank **53,** and then is sprayed into the storage space **52** via the nozzle **55** again. Thus, the dishwasher **51** uses the same cleaning liquid repeatedly. After the completion of the washing process, the dishwasher **51** deactivates the wash water pump **54,** and activates an evacuation pump **56** in order to drain the cleaning liquid from the storage tank **53** to the outside. Each of the wash water pump **54** and the evacuation pump **56** is selected from the pumps **1** equipped with the deformation suppressing part **39** in accordance with the respective first to sixth embodiments.

As explained in the above, in relation to the dishwasher **51,** with employing the pump 1 provided with the deformation suppressing part **39** as the wash water pump **54** and the evacuation pump **56,** it is possible to improve the efficiency of the wash water pump **54** and the evacuation pump **56.** Consequently, the dishwasher **51** with high efficiency can be proposed.

### (EIGHTH EMBODIMENT)

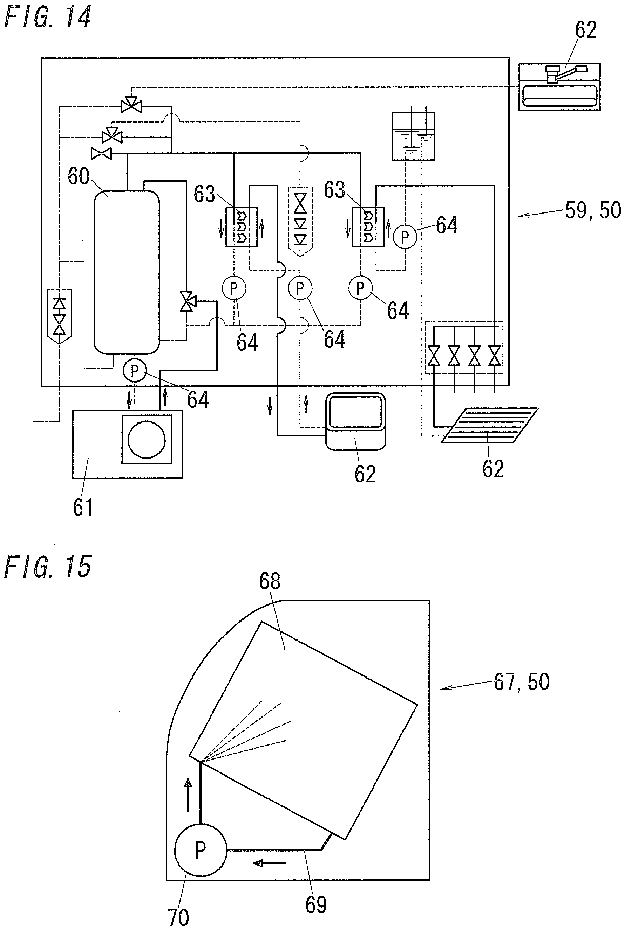

The following explanation referring to FIG. 14 is made to the device **50** in accordance with the eighth embodiment. The components common or equivalent to the pump **1** of any one of the above first to sixth embodiments are designated by the same reference numerals, and explanations thereof are deemed unnecessary. The definitions concerning the directions are same as the first embodiment.

The device **50** of the present embodiment is a heat supply system **59.** The heat supply system **59** includes a water tank unit **60,** a heat pump unit **61,** various output units (e.g., a bath, a faucet, a shower, and a floor heater) **62,** various heat exchangers **63,** and various valves. The water tank unit **60** is configured to store water (e.g., cold water and hot water). The heat pump unit **61** is configured to heat water. In addition, the heat supply system **59** includes flowing pumps **64** each configured to flow water (e.g., cold water and hot water). The flowing pump **64** is selected from the pumps **1** equipped with the deformation suppressing part **39** in accordance with the respective first to sixth embodiments. The heat supply system **59** operates the plural flowing pumps **64** and controls the various valves, thereby supplying, to the various output units **62,** water of a desired temperature at a desired flow rate. Consequently, each of the various output units **62** provides cold water, hot water, or heat.

As explained in the above, in relation to the heat supply system **59,** with employing the pump **1** equipped with the deformation suppressing part **39** as the flowing pump **64,** it is possible to improve the efficiency of the flowing pump **64.** Consequently, the heat supply system **59** with high efficiency can be proposed.

### (NINTH EMBODIMENT)

The following explanation referring to FIG. 15 is made to the device **50** in accordance with the ninth embodiment. The components common or equivalent to the pump **1** of any one of the above first to sixth embodiments are designated by the same reference numerals, and explanations thereof are deemed unnecessary. The definitions concerning the directions are same as the first embodiment.

The device **50** of the present embodiment is a washing machine **67.** The washing machine **67** includes a wash drum **68,** a drive unit (not shown), a water supply unit (not shown), and a circulation unit **69.** The wash drum **68** is configured to receive laundry such as clothes. The drive unit is configured to rotate the wash drum **68.** The water supply unit is configured to supply water into the wash drum **68.** The circulation unit **69** is configured to circulate water through the wash drum **68.** The washing machine **67** controls the drive unit to rotate the wash drum **68** and operates the circulation unit **69** to circulate water through the wash drum **68,** thereby washing laundry.

The drive unit employs a motor as a driving source. The circulation unit **69** includes a circulation pump **70** selected from the pumps **1** equipped with the deformation suppressing part **39** in accordance with the respective first to sixth embodiments.

As explained in the above, in relation to the washing machine **67,** with employing the pump **1** equipped with the deformation suppressing part **39** as the circulation pump **70,** it is possible to improve the efficiency of the circulation unit **69.** Consequently, the washing machine **67** with high efficiency can be proposed.

The present device **50** is not limited to any one of the devices **50** respectively corresponding to the seventh to ninth embodiments. For example, the device **50** may be a cooling device for an automobile employing any one of the pumps **1** respectively corresponding to the first to sixth embodiments as its coolant circulation pump, or a fuel cell device employing any one of the pumps **1** respectively corresponding to the first to sixth embodiments as its flowing pump.

Besides, the motor **8** may be used as the driving source of the driving part in the above washing machine **67.** The washing machine is not limited to one employing the motor **8** for the pump only.

## Claims

1. A motor comprising:
a first rotation member having a predetermined rotation axis, and
a second rotation member including a plurality of electric magnets arranged around the rotation axis,
wherein said motor is configured to energize said electric magnets of said second rotation member so as to cause relative rotation of said first rotation member to said second rotation member,
said motor further comprises a deformation suppressing part,
said electric magnet comprising:
a coil in the form of a cylindrical shape configured to extend along a protrusion direction across the rotation axis;
a core in the form of a bar shape configured to penetrate said coil in the protrusion direction; and
an extension part made of a magnetic material and configured to extend along the rotation axis from an end of said core close to said first rotation member, and
said deformation suppressing part being configured to suppress deformation of said extension part.

2. A motor as set forth in claim 1, wherein
said motor further comprises a partition interposed between said first rotation member and said second rotation member,
said deformation suppressing part being defined by a reinforcement member attached to either said partition or said extension part so as to be interposed between said partition and said extension part.

3. A motor as set forth in claim 1, wherein
said motor further comprises a partition interposed between said first rotation member and said second rotation member,
said electric magnet including a coil bobbin made of a dielectric material,
said coil bobbin comprising:
a first cover part interposed between said core and said coil so as to electrically insulate said core from said coil;
a second cover part configured to extend from an end of said first cover part close to said partition so as to cover an opposite surface of said extension part from said partition; and
a third cover part configured to extend from an apex of said second cover part so as to cover an apical surface of said extension part,
said deformation suppressing part being defined by a protrusion part extending from an apex of said third cover part toward said partition, and
said protrusion part having a surface opposite to said partition closer to said partition than a surface of said extension part opposite to said partition is.

4. A motor as set forth in claim 1, wherein
said motor further comprises a partition interposed between said first rotation member and said second rotation member,
said electric magnet including a coil bobbin made of a dielectric material,
said coil bobbin comprising:
a first cover part interposed between said core and said coil so as to electrically insulate said core from said coil;
a second cover part configured to extend from an end of said first cover part close to said partition so as to cover an opposite surface of said extension part from said partition; and
a third cover part configured to extend from an apex of said second cover part so as to cover an apical surface of said extension part,
said deformation suppressing part being defined by a fitting unit, and
said fitting unit including:
a recess provided to one of said apical surface of said extension part and an opposite surface of said third cover part facing said apical surface; and
a protrusion provided to the other of said apical surface of said extension part and said opposite surface of said third cover part so as to be fitted into said recess.

5. A motor as set forth in claim 1, wherein
said motor further comprises a partition interposed between said first rotation member and said second rotation member,
said deformation suppressing part being defined by a projection part extending from said partition to be interposed between said electric magnets adjacent to each other.

6. A motor as set forth in any one of claims 1 to 5, wherein
said deformation suppressing part is defined by a reinforcement member placed on said core so as to be in contact with a surface of said extension part opposite from said first rotation member.

7. A pump comprising said motor defined by any one of claims 1 to 6.

8. A device comprising said pump defined by claim 7.
